# EUROPEAN PATENT SPECIFICATION

(11) **EP 4 030 794 B1**
(45) Date of publication and mention of the grant of the patent: **15.11.2023**
(21) Application number: 22175984.8
(22) Date of filing: 30.05.2022
(51) Int. Cl.: H04W 4/48, H04W 4/80, H04L 67/12, H04L 67/51, H04W 84/18

(54) **METHOD AND APPARATUS FOR INTERCONNECTING VEHICLE AND MACHINE**
VERFAHREN UND VORRICHTUNG ZUM VERBINDEN VON FAHRZEUG UND MASCHINE
PROCÉDÉ ET DISPOSITIF D'INTERCONNEXION D'UN VÉHICULE ET D'UNE MACHINE

(30) Priority: 08.06.2021 CN 202110637808
(43) Date of publication of application: 20.07.2022
(73) Proprietor: Apollo Intelligent Connectivity (Beijing) Technology Co., Ltd., Beijing 100176 (CN)
(72) Inventor: LIU, Shubin, BEIJING, 100176 (CN); OUYANG, Nengjun, BEIJING, 100176 (CN); HUANG, Qili, BEIJING, 100176 (CN)
(74) Representative: Santarelli

(56) References cited:
- WO-A1-2017/063369
- WO-A1-2020/103592

## Description

### TECHNICAL FIELD

The present disclosure relates to the field of communication technology, specifically to the field of vehicle networking technology, and particularly to a method and apparatus for interconnecting a vehicle and a machine.

### BACKGROUND

With the increasingly rapid development of in-vehicle scenarios, the demands of people for the Internet of Vehicles are becoming more and more obvious. The existing interconnection scheme between a vehicle-mounted terminal and a mobile terminal is divided into a wired connection and a wireless connection. Here, the wired connection refers to an interconnection performed through a USB data line, etc., and the wireless connection refers to an interconnection performed by means of a local area network.

Nowadays, many vehicle networking companies promote a wireless direct connection scheme in pursuit of user experience. Moreover, the current wireless direct connection scheme is usually to turn on Bluetooth and WiFi or a hotspot to realize the experience of the interconnection between a vehicle machine and a mobile phone.

WO 2017/063369 A1 establishes a wireless direct connection between a first terminal and a second terminal through a channel designated by the first terminal, and data is transmitted through the channel. WO 2020/103592 A1 establishes a P2P link between a first and second terminal through a negotiated P2P channel, and data is transmitted between the negotiated channel.

### SUMMARY

The present disclosure provides a method and apparatus for interconnecting a vehicle and a machine, an electronic device and a storage medium.

In a first aspect, embodiments of the present disclosure provide a method for interconnecting a vehicle and a machine according to claim 1.

In a second aspect, embodiments of the present disclosure provide a method for interconnecting a vehicle and a machine according to claim 3.

In a third aspect, embodiments of the present disclosure provide an apparatus for interconnecting a vehicle and a machine according to claim 4.

In a fourth aspect, embodiments of the present disclosure provide an apparatus for interconnecting a vehicle and a machine according to claim 5.

In a fifth aspect, embodiments of the present disclosure provide a mobile terminal, comprising: a short-range wireless communication module and at least one processor; and a storage device, communicated with the at least one processor, wherein the storage device stores an instruction executable by the at least one processor, and the instruction is executed by the at least one processor, to enable the at least one processor to perform the method for interconnecting a vehicle and a machine provided by the first aspect, wherein the short-range wireless communication module is used to send the device information to a vehicle-mounted terminal based on a short-range wireless communication protocol.

In a six aspect, embodiments of the present disclosure provide a vehicle-mounted terminal, comprising: a short-range wireless communication module and at least one processor; and a storage device, communicated with the at least one processor, wherein the storage device stores an instruction executable by the at least one processor, and the instruction is executed by the at least one processor, to enable the at least one processor to perform the method for interconnecting a vehicle and a machine provided by the second aspect, wherein the short-range wireless communication module is used to receive, based on a short-range wireless communication protocol, device information sent by a mobile terminal.

In a seventh aspect, embodiments of the present disclosure provide a computer-readable medium, storing a computer program thereon, wherein the program, when executed by a processor, causes the processor to implement the method for interconnecting a vehicle and a machine provided by the first aspect or the second aspect.

In a eighth aspect, an embodiment of the present disclosure provides a computer program product, comprising a computer program, wherein the computer program, when executed by a processor, implements the method for interconnecting a vehicle and a machine provided by the first aspect or the second aspect.

It should be understood that the content described in this part is not intended to identify key or important features of the embodiments of the present disclosure, and is not used to limit the scope of the present disclosure. Other features of the present disclosure will be easily understood through the following description.

### BRIEF DESCRIPTION OF THE DRAWINGS

The accompanying drawings are used for a better understanding of the scheme, and do not constitute a limitation to the present disclosure. Here:
Fig. 1 is a flowchart of an embodiment of a method for interconnecting a vehicle and a machine according to the present disclosure;
Fig. 2 is a schematic diagram of an application scenario of the method for interconnecting a vehicle and a machine according to the present disclosure;
Fig. 3 is a flowchart of an embodiment in which data is transmitted, according to the present disclosure;
Fig. 4 is a flowchart of another embodiment of the method for interconnecting a vehicle and a machine according to the present disclosure;
Fig. 5 is a flowchart of an embodiment in which device information is received, according to the present disclosure;
Fig. 6 is a schematic structural diagram of an embodiment of an apparatus for interconnecting a vehicle and a machine according to the present disclosure;
Fig. 7 is a schematic structural diagram of another embodiment of the apparatus for interconnecting a vehicle and a machine according to the present disclosure; and
Fig. 8 is a block diagram of an electronic device used to implement the method for interconnecting a vehicle and a machine in the embodiments of the present disclosure.

### DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description.

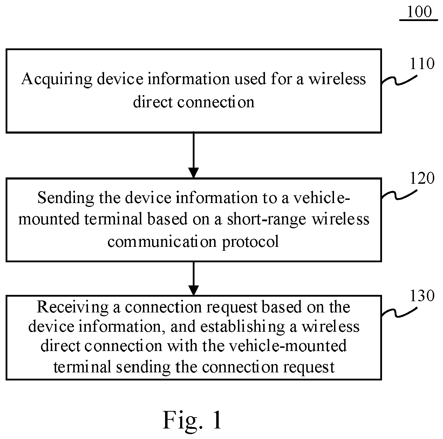

Referring to Fig. 1, Fig. 1 is a schematic flowchart 100 of an embodiment of a method for interconnecting a vehicle and a machine that may be applied to the present disclosure. The method for interconnecting a vehicle and a machine includes the following steps:

Step 110, acquiring device information used for a wireless direct connection.

In this embodiment, an executing body (e.g., a mobile terminal) of the method for interconnecting a vehicle and a machine may perform a detection on a WIFI P2P (wireless direct connection) module performing the wireless direct connection, to acquire device information of the WIFI P2P module. The device information may be information that can be used for the wireless direct connection, for example, a network port and a network address, that is, may be the information such as the network port and network address of the WIFI P2P module.

Step 120, sending the device information to a vehicle-mounted terminal based on a short-range wireless communication protocol.

In this embodiment, the above executing body may possess a short-range wireless communication module (NFC communication module) that can send data based on the short-range wireless communication protocol. The NFC communication module may be installed in the above executing body, or may be installed in the vehicle-mounted terminal. The NFC communication module in the above executing body may be in touch with the NFC communication module in the vehicle-mounted terminal to implement a short-range wireless communication connection, so as to perform a data transmission.

The above executing body may control the NFC communication module to send the device information according to the short-range wireless communication protocol. That is, when the NFC communication module of the above executing body is in touch with the NFC communication module of the vehicle-mounted terminal, the above executing body may control the NFC communication module to send the device information, and the NFC communication module of the vehicle-mounted terminal may receive the device information sent by the above executing body.

Step 130, receiving a connection request based on the device information, and establishing a wireless direct connection with the vehicle-mounted terminal sending the connection request.

In this embodiment, after the above executing body controls the NFC communication module to send the device information, the NFC communication module of the vehicle-mounted terminal receives the device information. The vehicle-mounted terminal may send the connection request to perform the wireless direct connection with the above executing body to the above executing body, according to the information (e.g., the network port and the network address) capable of performing the wireless direct connection in the device information.

After receiving the connection request sent by the vehicle-mounted terminal, the above executing body establishes the wireless direct connection with the vehicle-mounted terminal corresponding to the connection request, and thus, the above executing body and the vehicle-mounted terminal complete a vehicle-machine interconnection. Here, the wireless direct connection may refer to a point-to-point connection between WiFi devices, without the need for a point-to-end connection. The two WiFi devices put the constraint from a hot spot (i.e., a network) aside, and directly establish a connection with each other by using the WiFi technology, and thus, information and content can be shared between the WiFi devices.

As an example, the above executing body may send the device information including the address and port information of the WIFI P2P module to the NFC module of the vehicle-mounted terminal via the NFC module. After the NFC module of the vehicle-mounted terminal receives the device information, the vehicle-mounted terminal acquires the address and port information of the WIFI P2P module in the device information, and controls the WIFI P2P module of the vehicle-mounted terminal to send the connection request based on the address and port information of the WIFI P2P module of the above executing body, such that the WIFI P2P module of the vehicle-mounted terminal and the WIFI P2P module of the above executing body (mobile terminal) perform a WIFI wireless direct connection, to complete the vehicle-machine interconnection between the mobile terminal and the vehicle-mounted terminal.

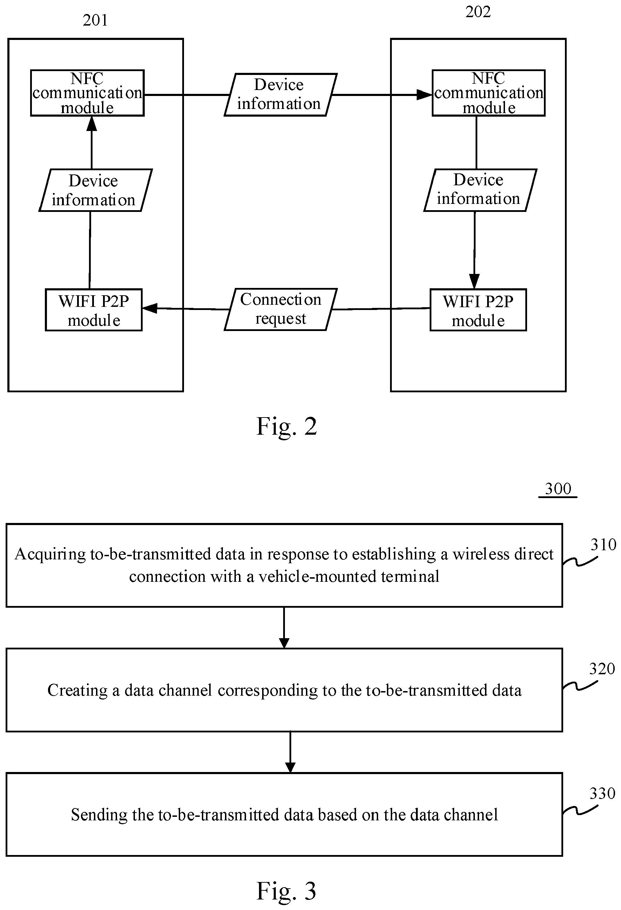

Further referring to Fig. 2, Fig. 2 is a schematic diagram of an application scenario of the method for interconnecting a vehicle and a machine according to this embodiment. In the application scenario of Fig. 2, a mobile terminal 201 performs a detection on a WIFI P2P module to acquire device information, and sends, through an NFC communication module, the device information used for a wireless direct connection to an NFC communication module of a vehicle-mounted terminal 202. Then, the NFC communication module of the vehicle-mounted terminal 202 receives the device information sent by the mobile terminal 201, and controls the WIFI P2P module of the vehicle-mounted terminal 202 to send a connection request to the mobile terminal 201 based on the device information. The WIFI P2P module of the mobile terminal 201 receives the connection request sent by the vehicle-mounted terminal 202, and establishes the wireless direct connection with the vehicle-mounted terminal 202, thus completing the vehicle-machine interconnection between the mobile terminal 201 and the vehicle-mounted terminal 202.

According to the method for interconnecting a vehicle and a machine provided in the embodiment of the present disclosure, the device information used for the wireless direct connection is acquired. Then, the device information is sent to the vehicle-mounted terminal based on the short-range wireless communication protocol. Finally, the connection request based on the device information is received, and the wireless direct connection is established with the vehicle-mounted terminal sending the connection request. The vehicle-machine interconnection is implemented through the data transmission based on the short-range wireless communication protocol, without the need to continuously scan surrounding devices like a Bluetooth module, thereby saving the device energy consumption. The method is suitable for a point-to-point transmission in a short range, thereby improving the pertinence of the vehicle-machine interconnection. The data is transmitted through the short-range wireless communication protocol. When required to be transmitted, the data can be transmitted by only sending the data based on the short-range wireless communication protocol, thereby improving the efficiency of the data transmission.

As an alternative implementation, the sending the device information to a vehicle-mounted terminal based on a short-range wireless communication protocol in step 120 may include: performing a short-range wireless communication connection with the vehicle-mounted terminal; and sending the device information to the vehicle-mounted terminal based on the short-range wireless communication protocol.

Specifically, the above executing body performs the detection on the NFC communication module. If it is detected that the NFC communication module of the above executing body is in touch with the NFC communication module of the vehicle-mounted terminal, and it is determined that the NFC communication module of the above executing body is in connection with the NFC communication module of the vehicle-mounted terminal, the above executing body and the vehicle-mounted terminal perform the short-range wireless communication connection.

The above executing body may control the NFC communication module to send the device information according to the short-range wireless communication protocol, and the NFC communication module of the vehicle-mounted terminal may receive the device information sent by the above executing body.

In this embodiment, by connecting with the NFC communication module of the vehicle-mounted terminal, the data is transmitted using the NFC communication module, without scanning a surrounding device. Accordingly, the data may be immediately transmitted once the NFC communication module is touched. Thus, when required to be transmitted, the data can be transmitted by implementing the touch between the NFC communication modules, thereby improving the efficiency of the data transmission.

As an alternative implementation, further referring to Fig. 3, the method for interconnecting a vehicle and a machine may further include the following steps:

Step 310, acquiring to-be-transmitted data in response to establishing the wireless direct connection with the vehicle-mounted terminal.

In this step, after receiving the connection request sent by the vehicle-mounted terminal based on the device information, the above executing body controls the WIFI P2P module used for the wireless direct connection to establish the wireless direct connection with the WIFI P2P module of the vehicle-mounted terminal. Here, the wireless direct connection (i.e., WIFI direct connection) is a transmission medium that implements point-to-point file sharing based on the wireless WIFI transmission technology. The wireless direct connection can simply, efficiently and quickly implement a file transmission operation between two devices.

The above executing body may acquire to-be-transmitted data according to a user operation, or receive to-be-transmitted data sent by an other device. The to-be-transmitted data may refer to data required to be transmitted in an in-vehicle scenario, that is, may refer to data sent by a user to the vehicle-mounted terminal through the above executing body. Alternatively, the to-be-transmitted data may refer to data required to be presented by the vehicle-mounted terminal to the above executing body. As an example, the to-be-transmitted data may include instruction data, multimedia data and speech broadcast data that need to be sent to the vehicle-mounted terminal, or may include control data or the like that the vehicle-mounted terminal needs to send to the above executing body.

Step 320, creating a data channel corresponding to the to-be-transmitted data.

In this step, after acquiring the to-be-transmitted data, the above executing body may send a creation request to the vehicle-mounted terminal through the wireless direct connection, the creation request being used to request a creation of the data channel corresponding to the to-be-transmitted data. Here, each category of to-be-transmitted data corresponds to one data channel, and the data channel is used to transmit a corresponding category of to-be-transmitted data.

After receiving the creation request, the vehicle-mounted terminal may establish the data channel corresponding to the to-be-transmitted data with the above executing body.

As an alternative implementation, the data channel may include at least one of: an instruction channel, a multimedia channel, a speech broadcast channel, or a reverse control channel.

Specifically, the instruction channel may correspond to the instruction data, and may be used to transmit a control instruction of the above executing body for the vehicle-mounted terminal to the vehicle-mounted terminal.

The multimedia channel corresponds to the multimedia data, and may include a media channel such as a video channel and a speech channel. Here, the video channel is used to transmit video data such as video content or a video call in the above executing body to the vehicle-mounted terminal. The speech channel is used to transmit speech data such as speech content or a speech call in the above executing body to the vehicle-mounted terminal. The multimedia channel may alternatively be used to transmit a multimedia file such as a music file and a news files in the above executing body to the vehicle-mounted terminal.

The speech broadcast channel (TTS speech broadcast channel) corresponds to the speech broadcast data, and may be used to transmit a text-to-speech speech broadcast file in the above executing body to the vehicle-mounted terminal.

The reverse control channel corresponds to the control data, and may be used to transmit a control instruction of the vehicle-mounted terminal for the above executing body.

Step 330, sending the to-be-transmitted data based on the data channel.

In this step, after creating the data channel corresponding to the to-be-transmitted data, the above executing body sends the acquired to-be-transmitted data to the vehicle-mounted terminal through the data channel, such that the vehicle-mounted terminal can present the to-be-transmitted data, or execute a corresponding instruction according to the to-be-transmitted data.

In this implementation, by establishing the data channel with the vehicle-mounted terminal, different requirements for data transmission in the in-vehicle scenario can be met, and different data can be transmitted through different data channels. Moreover, when the data is required to be transmitted, the data channel is created, thereby improving the efficiency of the data transmission and the utilization rate of the resource in the in-vehicle scenario.

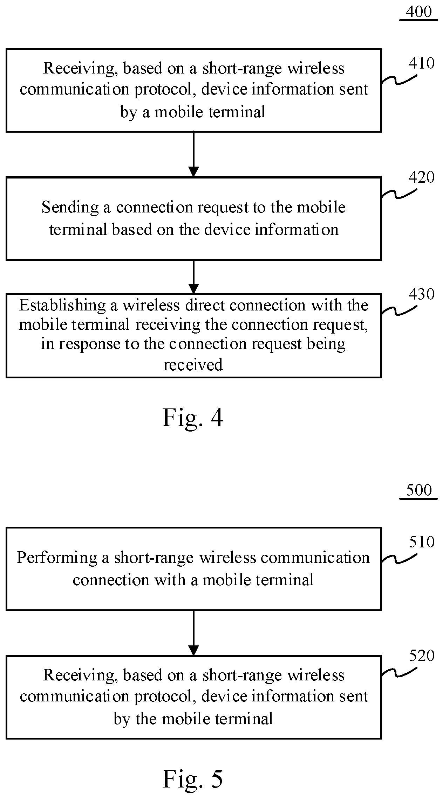

Referring to Fig. 4, Fig. 4 is a schematic flowchart 400 of another embodiment of the method for interconnecting a vehicle and a machine that may be applied to the present disclosure. The method for interconnecting a vehicle and a machine includes the following steps:

Step 410, receiving, based on a short-range wireless communication protocol, device information sent by a mobile terminal.

In this embodiment, an executing body (e.g., a vehicle-mounted terminal) of the method for interconnecting a vehicle and a machine may possess a short-range wireless communication module (NFC communication module) that can receive data based on the short-range wireless communication protocol. The NFC communication module may be installed in the above executing body, or may be installed in the mobile terminal. The NFC communication module in the above executing body may be in touch with the NFC communication module in the mobile terminal to implement a short-range wireless communication connection, so as to perform a data transmission.

The above executing body may receive, through the NFC communication module, the device information sent by the mobile terminal. The device information may be used for a wireless direct connection, and may include information used for the wireless direct connection, for example, a network port and a network address.

Step 420, sending a connection request to the mobile terminal based on the device information.

In this embodiment, after receiving the device information through the NFC communication module, the above executing body may determine the information (e.g., the network port and the network address) used for the wireless direct connection in the mobile terminal according to the device information. The above executing body sends the connection request to perform the wireless direct connection with the mobile terminal to the mobile terminal, according to the information (e.g., the network port and the network address) used for the wireless direct connection.

Step 430, establishing a wireless direct connection with the mobile terminal receiving the connection request, in response to the connection request being received.

In this embodiment, after the above executing body sends the connection request to perform the wireless direct connection to the mobile terminal, the mobile terminal receives the connection request, and establishes the wireless direct connection with the above executing body corresponding to the connection request, and thus, the above executing body and the mobile terminal complete a vehicle machine interconnection.

As an example, the mobile terminal may send the device information including the address and port information of a WIFI P2P module to the NFC communication module of the above executing body via the NFC communication module. After receiving the device information, the above executing body acquires the address and port information of the WIFI P2P module in the device information, and controls the WIFI P2P module to send the connection request based on the address and port information of the WIFI P2P module of the mobile terminal. After the mobile terminal receives the connection request, the WIFI P2P module of the mobile terminal and the WIFI P2P module of the above executing body (vehicle-mounted terminal) perform a WIFI wireless direct connection, to complete a vehicle-machine interconnection between the mobile terminal and the vehicle-mounted terminal.

According to the method for interconnecting a vehicle and a machine provided in the embodiment of the present disclosure, the device information sent by the mobile terminal is received based on the short-range wireless communication protocol, the device information being used for the wireless direct connection. Then, based on the device information, the connection request is sent to the mobile terminal. Finally, in response to the connection request being received, the wireless direct connection is established with the mobile terminal receiving the connection request. The vehicle-machine interconnection is implemented through the data transmission based on the short-range wireless communication protocol, without the need to continuously scan surrounding devices like a Bluetooth module, thereby saving the device energy consumption. The method is suitable for a point-to-point transmission in a short range, thereby improving the pertinence of the vehicle-machine interconnection. The data is transmitted through the short-range wireless communication protocol. When required to be transmitted, the data can be transmitted by only sending the data based on the short-range wireless communication protocol, thereby improving the efficiency of the data transmission.

Further referring to Fig. 5, Fig. 5 illustrates a step of receiving device information, and the step may include the following steps:

Step 510, performing a short-range wireless communication connection with a mobile terminal.

In this step, the above executing body performs a detection on an NFC communication module. If it is detected that the NFC communication module of the above executing body is in touch with the NFC communication module of the mobile terminal, and it is determined that the NFC communication module of the above executing body is in connection with the NFC communication module of the mobile terminal, the above executing body and the mobile terminal perform the short-range wireless communication connection with.

Step 520, receiving, based on a short-range wireless communication protocol, device information sent by the mobile terminal.

In this step, after the NFC communication module of the above executing body is connected with the NFC communication module of the mobile terminal, the mobile terminal may control the NFC communication module to send the device information according to the short-range wireless communication protocol. At this time, the above executing body controls the NFC communication module to receive, according to the short-range wireless communication protocol, the device information sent by the mobile terminal.

As an example, after the NFC communication module of the above executing body is connected with the NFC communication module of the mobile terminal, the NFC communication module is controlled to receive, according to the short-range wireless communication protocol, the device information sent by the mobile terminal, and controlled to acquire the IP address information and port information of the WIFI P2P module of the mobile terminal from the received device information. The above executing body controls a WIFI P2P module to send a connection request to the WIFI P2P module of the mobile terminal according to the acquired IP address information and the acquired port information, so as to establish a wireless direct connection between the above executing body (vehicle-mounted terminal) and the mobile terminal.

In this implementation, by connecting with the NFC communication module of the vehicle-mounted terminal, the data is transmitted using the NFC communication module, without scanning a surrounding device. Accordingly, the data may be immediately transmitted once the NFC communication module is touched. Thus, when required to be transmitted, the data can be transmitted by implementing the touch between the NFC communication modules, thereby improving the efficiency of the data transmission.

As an alternative implementation, the method for interconnecting a vehicle and a machine may further include: establishing a data channel corresponding to to-be-transmitted data with the mobile terminal, in response to establishing the wireless direct connection with the mobile terminal; and receiving the to-be-transmitted data based on the data channel.

Specifically, after receiving the connection request sent by the above executing body based on the device information, the mobile terminal controls the WIFI P2P module used for the wireless direct connection, to establish the wireless direct connection with the WIFI P2P module of the above executing body. The mobile terminal may acquire to-be-transmitted data according to a user operation, or receive to-be-transmitted data sent by an other device. The to-be-transmitted data may refer to data required to be transmitted in an in-vehicle scenario, that is, may refer to data sent by a user to the above executing body through the mobile terminal. Alternatively, the to-be-transmitted data may refer to data required to be presented by the above executing body to the mobile terminal. As an example, the to-be-transmitted data may include instruction data, multimedia data and speech broadcast data that need to be sent to the above executing body, or may include control data or the like that the above executing body needs to send to the mobile terminal.

After acquiring the to-be-transmitted data, the mobile terminal may send a creation request to the above executing body through the wireless direct connection, the creation request being used to request a creation of the data channel corresponding to the to-be-transmitted data. After receiving the creation request, the above executing body may establish the data channel corresponding to the to-be-transmitted data with the mobile terminal. Here, each category of to-be-transmitted data corresponds to one data channel, and the data channel is used to transmit a corresponding category of to-be-transmitted data.

After the above executing body establishes the data channel corresponding to the to-be-transmitted data with the mobile terminal, the mobile terminal may send the acquired to-be-transmitted data to the above executing body through the data channel, such that the above executing body can receive the to-be-transmitted data through the data channel and present the to-be-transmitted data, or execute a corresponding instruction according to the to-be-transmitted data.

Alternatively, the data channel may include at least one of: an instruction channel, a multimedia channel, a speech broadcast channel, or a reverse control channel.

In this implementation, by establishing the data channel with the vehicle-mounted terminal, different requirements for data transmission in the in-vehicle scenario can be met, and different data can be transmitted through different data channels. Moreover, when the data is required to be transmitted, the data channel is created, thereby improving the efficiency of the data transmission and the utilization rate of the resource in the in-vehicle scenario.

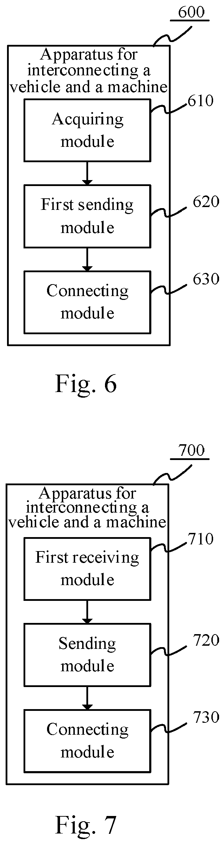

Further referring to Fig. 6, as an implementation of the method shown in the above drawings, the present disclosure provides an embodiment of an apparatus for interconnecting a vehicle and a machine. The embodiment of the apparatus corresponds to the embodiment of the method shown in Fig. 2, and the apparatus may be applied in a mobile terminal.

As shown in Fig. 6, the apparatus 600 for interconnecting a vehicle and a machine in this embodiment includes: an acquiring module 610, a first sending module 620 and a connecting module 630.

Here, the acquiring module 610 is configured to acquire device information used for a wireless direct connection.

The first sending module 620 is configured to send the device information to a vehicle-mounted terminal based on a short-range wireless communication protocol.

The connecting module 630 is configured to receive a connection request based on the device information, and establish a wireless direct connection with the vehicle-mounted terminal sending the connection request.

In some alternative implementations of this embodiment, the first sending module includes: a connecting unit, configured to perform a short-range wireless communication connection with the vehicle-mounted terminal; and a sending unit, configured to send the device information to the vehicle-mounted terminal based on the short-range wireless communication protocol.

In some alternative implementations of this embodiment, the apparatus further includes a creating module and a second sending module. The acquiring module is configured to acquire to-be-transmitted data, in response to establishing the wireless direct connection with the vehicle-mounted terminal. The creating module is configured to create a data channel corresponding to the to-be-transmitted data. The second sending module is configured to send the to-be-transmitted data based on the data channel.

In some alternative implementations of this embodiment, the data channel includes at least one of: an instruction channel, a multimedia channel, a speech broadcast channel, or a reverse control channel.

According to the apparatus for interconnecting a vehicle and a machine provided in the embodiment of the present disclosure, the device information used for the wireless direct connection is acquired. Then, the device information is sent to the vehicle-mounted terminal based on the short-range wireless communication protocol. Finally, the connection request based on the device information is received, and the wireless direct connection is established with the vehicle-mounted terminal sending the connection request. The vehicle-machine interconnection is implemented through the data transmission based on the short-range wireless communication protocol, without the need to continuously scan surrounding devices like a Bluetooth module, thereby saving the device energy consumption. The apparatus is suitable for a point-to-point transmission in a short range, thereby improving the pertinence of the vehicle-machine interconnection. The data is transmitted through the short-range wireless communication protocol. When required to be transmitted, the data can be transmitted by only sending the data based on the short-range wireless communication protocol, thereby improving the efficiency of the data transmission.

Further referring to Fig. 7, as an implementation of the method shown in the above drawings, the present disclosure provides an embodiment of an apparatus for interconnecting a vehicle and a machine. The embodiment of the apparatus corresponds to the embodiment of the method shown in Fig. 4, and the apparatus may be applied in a vehicle-mounted terminal.

As shown in Fig. 7, the apparatus 700 for interconnecting a vehicle and a machine in this embodiment includes: a first receiving module 710, a sending module 720 and a connecting module 730.

Here, the first receiving module 710 is configured to receive, based on a short-range wireless communication protocol, device information sent by a mobile terminal, the device information being used for a wireless direct connection.

The sending module 720 is configured to send a connection request to the mobile terminal based on the device information.

The connecting module 730 is configured to establish a wireless direct connection with the mobile terminal receiving the connection request, in response to the connection request being received.

In some alternative implementations of this embodiment, the first receiving module includes: a connecting unit, configured to perform a short-range wireless communication connection with the mobile terminal; and a receiving unit, configured to receive, based on the short-range wireless communication protocol, the device information sent by the mobile terminal.

In some alternative implementations of this embodiment, the apparatus further includes: an establishing module, configured to establish a data channel corresponding to to-be-transmitted data with the mobile terminal, in response to establishing the wireless direct connection with the mobile terminal; and a second receiving module, configured to receive the to-be-transmitted data based on the data channel.

According to the apparatus for interconnecting a vehicle and a machine provided in the embodiment of the present disclosure, the device information sent by the mobile terminal is received based on the short-range wireless communication protocol, the device information being used for the wireless direct connection. Then, based on the device information, the connection request is sent to the mobile terminal. Finally, in response to the connection request being received, the wireless direct connection is established with the mobile terminal receiving the connection request. The vehicle-machine interconnection is implemented through the data transmission based on the short-range wireless communication protocol, without the need to continuously scan surrounding devices like a Bluetooth module, thereby saving the device energy consumption. The apparatus is suitable for a point-to-point transmission in a short range, thereby improving the pertinence of the vehicle-machine interconnection. The data is transmitted through the short-range wireless communication protocol. When required to be transmitted, the data can be transmitted by only sending the data based on the short-range wireless communication protocol, thereby improving the efficiency of the data transmission.

The acquisition, storage, application, etc. of the personal information of a user that are involved in the technical solution in the present disclosure are all comply with the provisions of the relevant laws and regulations, and do not violate the public order and good customs.

According to an embodiment of the present disclosure, the present disclosure further provides a mobile terminal having a short-range wireless communication module, a vehicle-mounted terminal having a short-range wireless communication module, a readable storage medium and a computer program product.

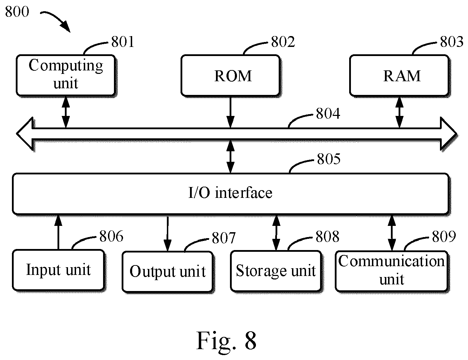

Fig. 8 is a schematic block diagram of an exemplary electronic device 800 that may be used to implement the embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 8, the electronic device 800 includes a computation unit 801, which may execute various appropriate actions and processes in accordance with a computer program stored in a read-only memory (ROM) 802 or a computer program loaded into a random access memory (RAM) 803 from a storage unit 808. The RAM 803 also stores various programs and data required by operations of the device 800. The computation unit 801, the ROM 802 and the RAM 803 are connected to each other through a bus 804. An input/output (I/O) interface 805 is also connected to the bus 804.

The following components in the electronic device 800 are connected to the I/O interface 805: an input unit 806, for example, a keyboard and a mouse; an output unit 807, for example, various types of displays and a speaker; a storage device 808, for example, a magnetic disk and an optical disk; and a communication unit 809, for example, a network card, a modem, a wireless communication transceiver. The communication unit 809 allows the device 800 to exchange information/data with an other device through a computer network such as the Internet and/or various telecommunication networks.

The computation unit 801 may be various general-purpose and/or special-purpose processing assemblies having processing and computing capabilities. Some examples of the computation unit 801 include, but not limited to, a central processing unit (CPU), a graphics processing unit (GPU), various dedicated artificial intelligence (AI) computing chips, various processors that run a machine learning model algorithm, a digital signal processor (DSP), any appropriate processor, controller and microcontroller, etc. The computation unit 801 performs the various methods and processes described above, for example, the method for interconnecting a vehicle and a machine. For example, in some embodiments, the method for interconnecting a vehicle and a machine may be implemented as a computer software program, which is tangibly included in a machine readable medium, for example, the storage device 808. In some embodiments, part or all of the computer program may be loaded into and/or installed on the device 800 via the ROM 802 and/or the communication unit 809. When the computer program is loaded into the RAM 803 and executed by the computation unit 801, one or more steps of the above method for interconnecting a vehicle and a machine may be performed. Alternatively, in other embodiments, the computation unit 801 may be configured to perform the method for interconnecting a vehicle and a machine through any other appropriate approach (e.g., by means of firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a particular-purpose or general-purpose programmable processor, which may receive data and instructions from a storage system, at least one input device and at least one output device, and send the data and instructions to the storage system, the at least one input device and the at least one output device.

Program codes used to implement the method of embodiments of the present disclosure may be written in any combination of one or more programming languages. These program codes may be provided to a processor or controller of a general-purpose computer, particular-purpose computer or other programmable data processing apparatus, so that the program codes, when executed by the processor or the controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the present disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more particular example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other. The server may be a cloud server, a distributed system server, or a server combined with a blockchain.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

The above particular implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the spirit and principles of the present disclosure are intended to be included within the scope of the present disclosure.

## Claims

1. A method for interconnecting a vehicle and a machine, comprising:
acquiring (110), by a mobile terminal corresponding to the machine, device information used for a wireless direct connection; wherein the device information includes a network port and a network address of a WIFI peer-to-peer, P2P, module of the mobile terminal;
sending (120), via a near field communication, NFC, module, the device information to a NFC module of a vehicle-mounted terminal, so that the vehicle-mounted terminal acquires the device information and controls a WIFI P2P module of the vehicle-mounted terminal to send a connection request to the mobile terminal based on the device information;
receiving (130), by the WIFI P2P module of the mobile terminal, the connection request based on the device information, and establishing a wireless direct connection with the vehicle-mounted terminal sending the connection request,
acquiring (310) to-be-transmitted data, in response to establishing the wireless direct connection with the vehicle-mounted terminal;
creating (320) a data channel corresponding to the to-be-transmitted data;
sending (330) the to-be-transmitted data based on the data channel.

2. The method according to claim 1, wherein the data channel comprises at least one of:
an instruction channel, a multimedia channel, a speech broadcast channel, or a reverse control channel.

3. A method for interconnecting a vehicle and a machine, comprising:
receiving (410), through a near field communication, NFC, module of a vehicle-mounted terminal, }, device information sent by a mobile terminal corresponding to the machine, the device information being used for a wireless direct connection; wherein the device information includes a network port and a network address of a WIFI peer-to-peer, P2P, module of the mobile terminal
sending (420), via a WIFI P2P module of the vehicle-mounted terminal, a connection request to the WIFI P2P module of the mobile terminal based on the device information }; and
establishing (430) a wireless direct connection with the mobile terminal receiving the connection request, in response to the connection request being received,
wherein the method further comprises:
establishing a data channel corresponding to to-be-transmitted data with the mobile terminal, in response to establishing the wireless direct connection with the mobile terminal; and
receiving the to-be-transmitted data based on the data channel.

4. An apparatus for interconnecting a vehicle and a machine, applied in a mobile terminal corresponding to the machine, comprising:
an acquiring module (610), configured to acquire device information used for a wireless direct connection; wherein the device information includes a network port and a network address of a WIFI peer-to-peer, P2P, module of the mobile terminal;
a first sending module (620), configured to send, via a near field communication, NFC, module, the device information to a NFC module of a vehicle-mounted terminal, so that the vehicle-mounted terminal acquires the device information and controls a WIFI P2P module of the vehicle-mounted terminal to send a connection request to the mobile terminal based on the device information;
a connecting module (630), configured to receive, by the WIFI P2P module of the mobile terminal, the connection request based on the device information, and establish a wireless direct connection with the vehicle-mounted terminal sending the connection request,
wherein the apparatus further comprises:
the acquiring module is further configured to acquire to-be-transmitted data, in response to establishing the wireless direct connection with the vehicle-mounted terminal;
a creating module, configured to create a data channel corresponding to the to-be-transmitted data; and
a second sending module, configured to send the to-be-transmitted data based on the data channel.

5. An apparatus for interconnecting a vehicle and a machine, applied in a vehicle-mounted terminal, comprising:
a first receiving module (710), configured to receive, through a near field communication, NFC, module of the vehicle-mounted terminal, device information sent by a mobile terminal corresponding to the machine, the device information being used for a wireless direct connection; wherein the device information includes a network port and a network address of a WIFI peer-to-peer, P2P, module of the mobile terminal;
a sending module (720), configured to send, via a WIFI P2P module of the vehicle-mounted terminal, a connection request to the WIFI P2P module of the mobile terminal based on the device information; and
a connecting module (730), configured to establish a wireless direct connection with the mobile terminal receiving the connection request, in response to the connection request being received,
wherein the apparatus further comprises:
an establishing module, configured to establish a data channel corresponding to to-be-transmitted data with the mobile terminal, in response to establishing the wireless direct connection with the mobile terminal; and
a second receiving module, configured to receive the to-be-transmitted data based on the data channel.

6. A mobile terminal, comprising:
a short-range wireless communication module and at least one processor; and
a storage device, communicated with the at least one processor,
wherein the storage device stores an instruction executable by the at least one processor, and the instruction is executed by the at least one processor, to enable the at least one processor to perform the method according to any one of claims 1-2,
wherein the short-range wireless communication module is used to send the device information to a vehicle-mounted terminal based on a short-range wireless communication protocol.

7. A vehicle-mounted terminal, comprising:
a short-range wireless communication module and at least one processor; and
a storage device, communicated with the at least one processor,
wherein the storage device stores an instruction executable by the at least one processor, and the instruction is executed by the at least one processor, to enable the at least one processor to perform the method according to any one of claims 3,
wherein the short-range wireless communication module is used to receive, based on a short-range wireless communication protocol, device information sent by a mobile terminal.

8. A non-transitory computer readable storage medium, storing a computer instruction, wherein the computer instruction is used to cause a computer to perform the method according to any one of claims 1-2 or of claims 3.

9. A computer program product, comprising a computer program, wherein the computer program, when executed by a processor, implements the method according to any one of claims 1-2 or of claims 3.

## Patentansprüche

1. Verfahren zum Verbinden eines Fahrzeugs und einer Maschine, umfassend:
Erfassen (110) von Vorrichtungsinformationen, die für eine drahtlose Direktverbindung verwendet werden, durch ein mobiles Terminal, das der Maschine entspricht; wobei die Vorrichtungsinformationen einen Netzwerkanschluss und eine Netzwerkadresse eines Moduls für WIFI Peer-to-Peer, P2P, des mobilen Terminals einschließen;
Senden (120) der Vorrichtungsinformationen über ein Nahfeldkommunikations-, NFC-, Modul an ein NFC-Modul eines fahrzeugmontierten Terminals, sodass das fahrzeugmontierte Terminal die Vorrichtungsinformationen erwirbt und ein WIFI-P2P-Modul des fahrzeugmontierten Terminals steuert, um basierend auf den Vorrichtungsinformationen eine Verbindungsanfrage an das mobile Terminal zu senden;
Empfangen (130) der Verbindungsanforderung basierend auf den Vorrichtungsinformationen durch das WIFI-P2P-Modul des mobilen Terminals und Herstellen einer drahtlosen Direktverbindung mit dem fahrzeugmontierten Terminal, das die Verbindungsanforderung sendet,
Erfassen (310) der zu übertragenden Daten als Antwort auf die Herstellung der drahtlosen Direktverbindung mit dem fahrzeugmontierten Terminal;
Erstellen (320) eines Datenkanals, der den zu sendenden Daten entspricht;
Senden (330) der zu sendenden Daten basierend auf dem Datenkanal.

2. Verfahren nach Anspruch 1, wobei der Datenkanal mindestens eines von Folgendem umfasst:
Einen Anweisungskanal, einen Multimediakanal, einen Sprachübertragungskanal oder einen Rückwärtssteuerungskanal.

3. Verfahren zum Verbinden eines Fahrzeugs und einer Maschine, umfassend:
Empfangen (410) von Vorrichtungsinformationen, die von einem mobilen Terminal, das der Maschine entspricht, gesendet werden, über ein Nahfeldkommunikations-, NFC-, Modul eines fahrzeugmontierten Terminals, wobei die Vorrichtungsinformationen für eine drahtlose Direktverbindung verwendet werden; wobei die Vorrichtungsinformationen einen Netzwerkanschluss und eine Netzwerkadresse eines WiFi-Peer-to-Peer-, P2P-Moduls der mobilen Terminals einschließen,
Senden (420), über ein WiFi-P2P-Modul des fahrzeugmontierten Terminals, einer Verbindungsanforderung an das WiFi-P2P-Modul des mobilen Terminals basierend auf den Vorrichtungsinformationen; und
Einrichten (430) einer drahtlosen Direktverbindung mit dem mobilen Terminal, das die Verbindungsanforderung empfängt, als Antwort auf den Empfang der Verbindungsanforderung,
wobei das Verfahren ferner Folgendes umfasst:
eines Datenkanals, der den zu sendenden Daten mit dem mobilen Terminal entspricht, als Antwort auf dem Einrichten der drahtlosen Direktverbindung mit dem mobilen Terminal; und
Empfangen der zu sendenden Daten basierend auf dem Datenkanal.

4. Gerät zum Verbinden eines Fahrzeugs und einer Maschine, das in einem mobilen Terminal, das der Maschine entspricht, eingesetzt wird, umfassend:
Ein Erfassungsmodul (610), das konfiguriert ist, um Vorrichtungsinformationen zu erfassen, die für eine drahtlose Direktverbindung verwendet werden; wobei die Vorrichtungsinformationen einen Netzwerkanschluss und eine Netzwerkadresse eines Moduls für WIFI Peer-to-Peer, P2P, des mobilen Terminals einschließen;
ein erstes Sendemodul (620), konfiguriert zum Senden der Vorrichtungsinformationen über ein Nahfeldkommunikations-, NFC-, Modul an ein NFC-Modul eines fahrzeugmontierten Terminals, sodass das fahrzeugmontierte Terminal die Vorrichtungsinformationen erwirbt und ein WIFI-P2P-Modul des fahrzeugmontierten Terminals steuert, um basierend auf den Vorrichtungsinformationen eine Verbindungsanfrage an das mobile Terminal zu senden;
ein Verbindungsmodul (630), das so konfiguriert ist, dass es durch das WIFI-P2P-Modul des mobilen Terminals die Verbindungsanforderung basierend auf den Vorrichtungsinformationen empfängt und eine drahtlose Direktverbindung mit dem fahrzeugmontierten Terminal herstellt, das die Verbindungsanforderung sendet,
wobei das Gerät ferner Folgendes umfasst:
das Erfassungsmodul ist ferner so konfiguriert, dass es als Antwort auf den Aufbau der drahtlosen Direktverbindung mit dem fahrzeugmontierten Terminal die zu sendenden Daten erfasst;
ein Erstellungsmodul, das so konfiguriert ist, dass es einen Datenkanal erstellt, der den zu sendenden Daten entspricht; und
ein zweites Sendemodul, das konfiguriert ist, um die zu sendenden Daten basierend auf dem Datenkanal zu senden.

5. Gerät zum Verbinden eines Fahrzeugs und einer Maschine, das in einem fahrzeugmontierten Terminal angewandt wird, umfassend:
Ein erstes Empfangsmodul (710), das so konfiguriert ist, dass es über ein Modul für die Nahfeldkommunikation, NFC, des fahrzeugmontierten Terminals Vorrichtungsinformationen empfängt, die von einem der Maschine entsprechenden mobilen Terminal gesendet werden, wobei die Vorrichtungsinformationen für eine drahtlose Direktverbindung verwendet werden; wobei die Vorrichtungsinformationen einen Netzwerkanschluss und eine Netzwerkadresse eines Moduls für WIFI Peer-to-Peer, P2P, des mobilen Terminals einschließen;
ein Sendemodul (720), das so konfiguriert ist, dass es über ein WIFI-P2P-Modul des fahrzeugmontierten Terminals eine auf den Vorrichtungsinformationen basierende Verbindungsanforderung an das WIFI-P2P-Modul des mobilen Terminals sendet; und
ein Verbindungsmodul (730), das so konfiguriert ist, dass es als Antwort auf die empfangene Verbindungsanforderung eine drahtlose Direktverbindung mit dem mobilen Terminal, das die Verbindungsanforderung empfängt, herstellt,
wobei das Gerät ferner Folgendes umfasst:
Ein Aufbaumodul, das so konfiguriert ist, dass es als Antwort auf den Aufbau der drahtlosen Direktverbindung mit dem mobilen Terminal einen Datenkanal aufbaut, der den zu sendenden Daten entspricht; und
ein zweites Empfangsmodul, das so konfiguriert ist, dass es die zu sendenden Daten basierend auf dem Datenkanal empfängt.

6. Mobiles Terminal, umfassend:
Ein drahtloses Kommunikationsmodul für den Nahbereich und mindestens einen Prozessor; und
eine Speichervorrichtung, die mit dem mindestens einen Prozessor kommuniziert,
wobei die Speichervorrichtung eine Anweisung speichert, die von dem mindestens einen Prozessor ausgeführt werden kann, und die Anweisung von dem mindestens einen Prozessor ausgeführt wird, um den mindestens einen Prozessor in die Lage zu versetzen, das Verfahren nach einem der Ansprüche 1 bis 2 durchzuführen,
wobei das drahtlose Kommunikationsmodul mit kurzer Reichweite verwendet wird, um die Vorrichtungsinformationen basierend auf einem drahtlosen Kommunikationsprotokoll mit kurzer Reichweite an ein fahrzeugmontiertes Terminal zu senden.

7. Fahrzeugmontiertes Terminal, umfassend:
Ein drahtloses Kommunikationsmodul für den Nahbereich und mindestens einen Prozessor; und
eine Speichervorrichtung, die mit dem mindestens einen Prozessor kommuniziert,
wobei die Speichervorrichtung eine Anweisung speichert, die von dem mindestens einen Prozessor ausgeführt werden kann, und die Anweisung von dem mindestens einen Prozessor ausgeführt wird, um den mindestens einen Prozessor in die Lage zu versetzen, das Verfahren nach Anspruch 3 durchzuführen,
wobei das drahtlose Kommunikationsmodul mit kurzer Reichweite verwendet wird, um basierend auf einem drahtlosen Kommunikationsprotokoll mit kurzer Reichweite Vorrichtungsinformationen zu empfangen, die von einem mobilen Terminal gesendet werden.

8. Nicht-übertragbares, computerlesbares Speichermedium, das eine Computeranweisung speichert, wobei die Computeranweisung verwendet wird, um einen Computer zu veranlassen, das Verfahren nach einem der Ansprüche 1-2 oder nach Anspruch 3 auszuführen.

9. Computerprogrammprodukt, umfassend ein Computerprogramm, wobei das Computerprogramm, wenn es von einem Prozessor ausgeführt wird, das Verfahren nach einem der Ansprüche 1-2 oder nach Anspruch 3 implementiert.

## Revendications

1. Procédé pour interconnecter un véhicule et une machine, comprenant :
l'acquisition (110), par un terminal mobile correspondant à la machine, d'informations de dispositif utilisées pour une connexion directe sans fil ; dans lequel les informations de dispositif comportent un port de réseau et une adresse de réseau d'un module de pair à pair, P2P, WIFI du terminal mobile ;
l'envoi (120), par le biais d'un module de communication en champ proche, NFC, des informations de dispositif à un module NFC d'un terminal monté sur un véhicule de telle sorte que le terminal monté sur un véhicule acquière les informations de dispositif et commande un module P2P WIFI du terminal monté sur un véhicule pour envoyer une demande de connexion au terminal mobile sur la base des informations de dispositif ;
la réception (130), par le module P2P WIFI du terminal mobile, de la demande de connexion sur la base des informations de dispositif et l'établissement d'une connexion directe sans fil avec le terminal monté sur un véhicule envoyant la demande de connexion,
l'acquisition (310) des données à transmettre, à la suite de l'établissement de la connexion directe sans fil avec le terminal monté sur un véhicule ;
la création (320) d'un canal de données correspondant aux données à transmettre ;
l'envoi (330) des données à transmettre sur la base du canal de données.

2. Procédé selon la revendication 1, dans lequel le canal de données comprend au moins l'un :
d'un canal d'instruction, d'un canal multimédia, d'un canal de diffusion de parole ou d'un canal de commande inverse.

3. Procédé pour interconnecter un véhicule et une machine, comprenant :
la réception (410), au moyen d'un module de communication en champ proche, NFC, d'un terminal monté sur un véhicule, d'informations de dispositif envoyées par un terminal mobile correspondant à la machine, les informations de dispositif étant utilisées pour une connexion directe sans fil ; dans lequel les informations de dispositif comportent un port de réseau et une adresse de réseau d'un module de pair à pair, P2P, WIFI du terminal mobile ;
l'envoi (420), par le biais d'un module P2P WIFI du terminal monté sur un véhicule, d'une demande de connexion au module P2P WIFI du terminal mobile sur la base des informations de dispositif ; et
l'établissement (430) d'une connexion directe sans fil avec le terminal mobile recevant la demande de connexion en réponse à la demande de connexion qui est reçue,
dans lequel le procédé comprend en outre :
l'établissement d'un canal de données correspondant à des données à transmettre avec le terminal mobile à la suite de l'établissement de la connexion directe sans fil avec le terminal mobile ; et
la réception des données à transmettre sur la base du canal de données.

4. Appareil pour interconnecter un véhicule et une machine, appliqué dans un terminal mobile correspondant à la machine, comprenant :
un module d'acquisition (610), configuré pour acquérir des informations de dispositif utilisées pour une connexion directe sans fil ; dans lequel les informations de dispositif comportent un port de réseau et une adresse de réseau d'un module de pair à pair, P2P, WIFI du terminal mobile ;
un premier module d'envoi (620), configuré pour envoyer, par le biais d'un module de communication en champ proche, NFC, les informations de dispositif à un module NFC d'un terminal monté sur un véhicule de telle sorte que le terminal monté sur un véhicule acquière les informations de dispositif et commande un module P2P WIFI du terminal monté sur un véhicule pour envoyer une demande de connexion au terminal mobile sur la base des informations de dispositif ;
un module de connexion (630), configuré pour recevoir, par le module P2P WIFI du terminal mobile, la demande de connexion sur la base des informations de dispositif et pour établir une connexion directe sans fil avec le terminal monté sur un véhicule envoyant la demande de connexion,
dans lequel l'appareil comprend en outre :
le module d'acquisition est en outre configuré pour acquérir des données à transmettre, à la suite de l'établissement de la connexion directe sans fil avec le terminal monté sur un véhicule ;
un module de création configuré pour créer un canal de données correspondant aux données à transmettre ; et
un deuxième module d'envoi configuré pour envoyer les données à transmettre sur la base du canal de données.

5. Appareil pour interconnecter un véhicule et une machine, appliqué dans un terminal monté sur un véhicule, comprenant :
un premier module de réception (710), configuré pour recevoir, au moyen d'un module de communication en champ proche, NFC, du terminal monté sur un véhicule, des informations de dispositif envoyées par un terminal mobile correspondant à la machine, les informations de dispositif étant utilisées pour une connexion directe sans fil ; dans lequel les informations de dispositif comportent un port de réseau et une adresse de réseau d'un module de pair à pair, P2P, WIFI du terminal mobile ;
un module d'envoi (720), configuré pour envoyer, par le biais d'un module P2P WIFI du terminal monté sur un véhicule, une demande de connexion au module P2P WIFI du terminal mobile sur la base des informations de dispositif ; et
un module de connexion (730), configuré pour établir une connexion directe sans fil avec le terminal mobile recevant la demande de connexion en réponse à la demande de connexion qui est reçue,
dans lequel l'appareil comprend en outre :
un module d'établissement configuré pour établir un canal de données correspondant à des données à transmettre avec le terminal mobile à la suite de l'établissement de la connexion directe sans fil avec le terminal mobile ; et
un deuxième module de réception configuré pour recevoir les données à transmettre sur la base du canal de données.

6. Terminal mobile comprenant :
un module de communication sans fil à courte portée et au moins un processeur ; et
un dispositif de stockage, en communication avec l'au moins un processeur,
dans lequel le dispositif de stockage stocke une instruction exécutable par l'au moins un processeur et l'instruction est exécutée par l'au moins un processeur pour permettre à l'au moins un processeur de réaliser le procédé selon l'une quelconque des revendications 1 à 2,
dans lequel le module de communication sans fil à courte portée est utilisé pour envoyer les informations de dispositif au terminal monté sur un véhicule sur la base d'un protocole de communication sans fil à courte portée.

7. Terminal monté sur un véhicule comprenant :
un module de communication sans fil à courte portée et au moins un processeur ; et
un dispositif de stockage, en communication avec l'au moins un processeur,
dans lequel le dispositif de stockage stocke une instruction exécutable par l'au moins un processeur et l'instruction est exécutée par l'au moins un processeur pour permettre à l'au moins un processeur de réaliser le procédé selon l'une quelconque des revendications 3,
dans lequel le module de communication sans fil à courte portée est utilisé pour recevoir, sur la base d'un protocole de communication sans fil à courte portée, des informations de dispositif envoyées par un terminal mobile.

8. Support de stockage non transitoire lisible par ordinateur stockant une instruction d'ordinateur, dans lequel l'instruction d'ordinateur est utilisée pour amener un ordinateur à réaliser le procédé selon l'une quelconque des revendications 1 à 2 ou selon la revendication 3.

9. Produit de programme d'ordinateur, comprenant un programme d'ordinateur, dans lequel le programme d'ordinateur, lorsqu'il est exécuté par un processeur, met en œuvre le procédé selon l'une quelconque des revendications 1 à 2 ou selon la revendication 3.
